(19) Europäisches Patentamt
European Patent Office
Office européen des brevets

(11) Numéro de publication: **0 551 317 B1**

# (12) FASCICULE DE BREVET EUROPEEN

(45) Date de publication de fascicule du brevet: **07.12.94**

(51) Int. Cl.$^5$: **C08F 8/12**, C08F 30/02

(21) Numéro de dépôt: **91916926.8**

(22) Date de dépôt: **24.09.91**

(86) Numéro de dépôt internationale :
**PCT/EP91/01846**

(87) Numéro de publication internationale :
**WO 92/06122 (16.04.92 92/09)**

## (54) POLYMERES ORGANOPHOSPHONIOUES ET LEUR UTILISATION COMME STABILISANTS DE SOLUTIONS AOUEUSES DE PEROXYDE D'HYDROGENE.

(30) Priorité: **02.10.90 BE 9000935**

(43) Date de publication de la demande:
**21.07.93 Bulletin 93/29**

(45) Mention de la délivrance du brevet:
**07.12.94 Bulletin 94/49**

(84) Etats contractants désignés:
**AT BE CH DE ES FR GB IT NL SE**

(56) Documents cités:
**EP-A- 309 031**
**GB-A- 933 107**
**GB-A- 2 090 265**
**US-A- 3 943 074**
**US-A- 4 822 861**

(73) Titulaire: **SOLVAY INTEROX (Société Anonyme)**
**Rue du Prince Albert, 33**
**B-1050 Bruxelles (BE)**

(72) Inventeur: **VAN HEMELRIJK, Dirck**
**Van Haverbekelaan 5**
**B-2050 Antwerpen (BE)**
Inventeur: **COISNE, Jean-Marc**
**Rue de la Taille 40**
**B-5190 Jemeppe-sur-Sambre (BE)**
Inventeur: **TINNEMANS, Aloysius, H., A.**
**Dalweg 25**
**NL-3707 BG Zeist (NL)**

(74) Mandataire: **Decamps, Alain René François et al**
**SOLVAY & Cie S.A.**
**Département de la Propriété Industrielle**
**Rue de Ransbeek, 310**
**B-1120 Bruxelles (BE)**

EP 0 551 317 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des polymères organophosphoniques comportant des groupements hydroxyles ainsi qu'un procédé pour la fabrication de tels polymères.

Elle concerne aussi l'utilisation desdits polymères pour stabiliser des solutions de peroxyde d'hydrogène contre la décomposition en oxygène et en eau.

On connaît depuis longtemps des polymères organophosphoniques où les groupements phosphoniques sont portés par une chaîne alkyle ou arylalkyle non substituée (Anbar M., St. John G.A. et Scott A. C. "Organic Polymeric Polyphosphonates as Potential Preventive Agents of Dental Caries : In Vitro Experiments" Journal of Dental Research, 1974, 53(4), pages 867 à 878, * pages 869 et 870 *.

Le brevet luxembourgeois No 62270 au nom de SOLVAY & Cie décrit un polymère organique constitué d'une chaîne alkyle substituée par des groupes hydroxyles et des groupes carboxyliques qui possède la propriété de séquestrer les ions métalliques.

Aucun de ces polymères n'est cependant capable de stabiliser efficacement une solution concentrée de peroxyde d'hydrogène contre la décomposition en oxygène et en eau lorsqu'elle est mise en présence d'ions métalliques.

L'invention remédie à cet inconvénient des produits connus en fournissant un produit nouveau capable de stabiliser efficacement et pour de longues périodes des solutions de peroxyde d'hydrogène concentrées contre la décomposition induite par des contaminations d'ions métalliques.

A cet effet, l'invention concerne des polymères organophosphoniques qui répondent à la formule générale suivante :

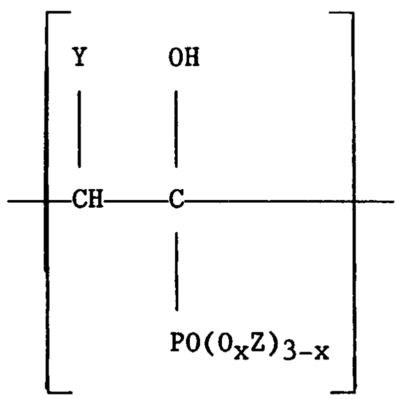

dans laquelle Y est un groupe méthyle, éthyle ou un atome d'hydrogène, Z représente un atome d'hydrogène, le groupe ammonium, un atome de métal alcalin ou de métal alcalino-terreux et x est un nombre entier égal à 1 lorsque Z représente un atome d'hydrogène, le groupement ammonium ou un atome de métal alcalin, ou à 2 lorsque Z représente un atome de métal alcalino-terreux.

Parmi les polymères selon l'invention, les produits dans lesquels Y représente un groupe méthyle ou un atome d'hydrogène, où Z représente un atome de métal alcalin ou le groupe ammonium et x est égal à 1 sont spécialement dignes d'intérêt, en particulier les poly-α-(hydroxyvinylphosphonates) de métal alcalin.

L'invention concerne aussi un procédé de fabrication desdits polymères selon lequel on réalise les trois étapes consécutives suivantes :

- synthèse d'un monomère par réaction d'un cétène avec du diéthylphosphite en présence d'un catalyseur acide;
- polymérisation en solution dans un solvant du monomère obtenu à la première étape, en présence d'un initiateur de radicaux libres;
- hydrolyse du polymère obtenu au moyen d'une solution concentrée d'acide inorganique ou de base inorganique.

Dans la première étape du procédé selon l'invention, on entend désigner par cétène un composé de structure hétérocumulène Y-CH=C=O dans laquelle Y représente un atome d'hydrogène, le groupe méthyle ou le groupe éthyle. Le dérivé dans lequel Y représente un atome d'hydrogène, appelé cétène proprement dit, convient particulièrement bien.

Le diéthylphosphite est un ester de l'acide phosphoreux qui répond à la formule de structure suivante : $HO\text{-}P(OC_2H_5)_2$.

Le monomère obtenu à la première étape du procédé selon l'invention est un diéthyl-1-acétoxyalkénylphosphonate qui répond à la formule :

$Y\text{-}CH = C(OCOCH_3)(OP(OC_2H_5)_2)$

Y représentant un atome d'hydrogène, le groupe méthyle ou le groupe éthyle.

Le catalyseur employé dans la première étape appartient à la catégorie des catalyseurs acides. Tout acide inorganique donneur de protons ou les acides de Lewis bien connus par eux-mêmes tels que, par exemple, l'acide sulfurique, le trichlorure d'aluminium, le trifluorure de bore et le trifluorure d'antimoine peuvent être employés. Les complexes de coordination que forment les acides de Leuis avec les éthers-oxydes sont eux aussi bien adaptés pour catalyser la réaction de synthèse du monomère. Les complexes des acides de Lewis avec le diéthyléther conviennent particulièrement bien et, en particulier, l'étherate de trifluorure de bore de formule :

$CH_3\text{-}CH_2\text{-}O(BF_3)\text{-}CH_2\text{-}CH_3$.

La première étape se fait en phase liquide par introduction du cétène dans le diéthylphosphite contenant le catalyseur dissous. La présence d'un solvant inerte représente une variante intéressante. Par solvant inerte, on entend tout solvant qui n'interfère pas avec les réactifs utilisés ni avec le catalyseur. Des exemples de tels solvants sont les hydrocarbures aliphatiques et aromatiques liquides dans les conditions de la réaction, les éthers aliphatiques tels que l'éthyléther et les solvants chlorés tels que le tétrachlorure de carbone. Le toluène est un solvant qui convient particulièrement bien.

La température de la première étape n'est pas une variable critique par elle-même. Lorsqu'on travaille à pression atmosphérique, elle doit être choisie dans chaque cas d'espèce en fonction du cétène mis en oeuvre de façon à assurer un bon contact entre le cétène et le diéthylphosphite. Dans les cas où le cétène employé se trouve à l'état gazeux, il est recommandé de modérer la température de la réaction pour maintenir une solubilité suffisante du cétène dans le milieu réactionnel. Il est aussi possible de travailler à des pressions supérieures à la pression atmosphérique.

La polymérisation du monomère obtenu à la première étape se fait de préférence par voie radicalaire sous atmosphère d'un gaz inerte tel que l'azote, en solution dans un solvant et en présence d'un initiateur de radicaux libres du type peroxyde. Les solvants appropriés pour ce type de polymérisation conviennent bien et, en particulier les alcools aliphatiques. Des exemples de tels solvants sont les alcools isobutylique et isoamylique ainsi que le 1-pentanol. L'alcool isobutylique s'est révélé particulièrement intéressant.

L'initiateur de radicaux libres peut, selon l'invention, être tout peroxyde organique utilisé pour catalyser les polymérisations de type radicalaire. Des exemples de tels peroxydes sont le peroxyde de dibenzoyle, les peroxydes de t-butyle et les peroxydicarbonates, en particulier les peroxydicarbonates de cyclohexyle et de t-butyle. Le t-butyl-peroxy-2-éthylhexanoate a donné les meilleurs résultats.

Une variante intéressante pour la deuxième étape de polymérisation du monomère consiste à réaliser la polymérisation dans la masse sans faire usage d'un solvant.

La durée et la température de la réaction de polymérisation du monomère ne sont pas critiques par elle-mêmes. Elles doivent être ajustées dans chaque cas d'espèce en fonction du type de monomère employé de façon à obtenir une conversion quasi complète endéans un délai raisonnable. Des températures de 40 à 120 °C et des durées de 4 à 48 heures conviennent bien et, de préférence 70 à 100 °C et 12 à 36 heures.

La troisième étape de la fabrication des polymères organophosphoniques selon l'invention consiste à soumettre le polymère obtenu à une hydrolyse acide ou alcaline des fonctions esters. Afin d'atteindre un taux de conversion élevé, il est nécessaire de réaliser des conditions drastiques lors de l'hydrolyse. En général, on y parvient en utilisant des solutions aqueuses concentrées d'acide inorganique ou de base inorganique.

L'étape d'hydrolyse se réalise de préférence sous atmosphère d'un gaz inerte tel que l'azote et à des températures comprises entre 40 et 100 °C. Lorsque la température est comprise entre 60 et 90 °C, les durées de réaction se si tuent généralement entre 4 et 12 heures.

L'invention concerne aussi des solutions aqueuses de peroxyde d'hydrogène stabilisées au moyen desdits polymères organophosphoniques contre la décomposition en oxygène et en eau.

Par solution aqueuse de peroxyde d'hydrogène, on entend désigner toute solution aqueuse de peroxyde d'hydrogène dont la concentration pondérale est comprise entre 0,1 et 99 g $H_2O_2$/100 g de solution et, de préférence, entre 0,5 et 95 %. Avantageusement, cette solution peut être une solution commerciale de peroxyde d'hydrogène de concentration pondérale comprise entre 25 et 70 g $H_2O_2$/100 g

de solution.

Il est le plus souvent avantageux que, dans la formule générale du polymère organophosphonique, Y représente le groupe méthyle ou un atome d'hydrogène et que Z représente un atome de métal alcalin.

Des polymères organophosphoniques qui ont donné des résultats particulièrement intéressants comme stabilisants des solutions aqueuses de peroxyde d'hydrogène sont l'acide poly-α-(hydroxyvinylphosphonique) et ses sels de métal alcalin ou d'ammonium.

La teneur optimale en polymère organophosphonique dans les solutions aqueuses de peroxyde d'hydrogène dépend de divers paramètres, notamment de la concentration de la solution en peroxyde d'hydrogène, de son pH ainsi que du polymère organophosphonique sélectionné. En pratique, il est généralement souhaitable que la solution aqueuse de peroxyde d'hydrogène contienne au moins 0,5 mg de polymère organophosphonique par kg de solution, et de préférence pas plus de 2500 mg. Les teneurs préférées se si tuent entre 1 et 300 mg par kg de solution.

L'invention s'applique indifféremment aux solutions de peroxyde d'hydrogène qui sont acides, neutres ou basiques. Elle trouve notamment une application avantageuse pour les solutions acides dont le pH est compris entre 2 et 5.

Des exemples de telles solutions sont les solutions de peroxyde d'hydrogène utilisées pour le nettoyage des verres d'optique, en particulier les lentilles de contact, les solutions d'$H_2O_2$ pour l'hydrométallurgie, en particulier en extraction des métaux par lixiviation des minerais, les solutions d'$H_2O_2$ pour la gravure, le décapage et le polissage des métaux (par exemple, les bains pour le polissage chimique du cuivre, tels que ceux décrits dans la demande de brevet FR-A-87.13407 (SOLVAY & Cie)), les solutions d'$H_2O_2$ utilisées pour la protection de l'environnement, comme celles utilisées pour détoxiquer les effluents liquides ou gazeux et celles utilisées pour la purification des eaux, les solutions d'$H_2O_2$ utilisées dans l'industrie alimentaire, et, en particulier, celles servant à la désinfection des emballages et des récipients.

Selon une forme de réalisation avantageuse de l'invention, la solution aqueuse de peroxyde d'hydrogène peut être un bain de blanchiment aqueux contenant du peroxyde d'hydrogène en concentration comprise entre 0,5 et 50 g $H_2O_2$/100 g de solution. Des exemples de tels bains de blanchiment sont les liqueurs de lavage ou de blanchiment au peroxyde d'hydrogène des matières textiles et les liqueurs de blanchiment au peroxyde d'hydrogène des pâtes à papier.

Dans les techniques pour le blanchiment des pâtes à papier au moyen de solutions aqueuses de peroxyde d'hydrogène, il peut parfois se révéler avantageux de prétraiter la pâte à papier à blanchir par un polymère organophosphonique avant d'effectuer le traitement de blanchiment au peroxyde d'hydrogène. Cette dernière technique est particulièrement intéressante lorsque la pâte à blanchir appartient à la classe des pâtes à haut rendement.

L'invention concerne aussi l'utilisation desdits polymères organophosphoniques pour stabiliser des solutions aqueuses de peroxyde d'hydrogène.

L'invention présente l'avantage de fournir des solutions aqueuses de peroxyde d'hydrogène dont la stabilité à long terme est améliorée vis-à-vis de la décomposition induite par les cations de métaux lourds et de transition par rapport aux stabilisants polymères organiques connus. Les exemples non limitatifs qui suivent sont donnés dans le but d'illustrer l'invention.

Exemple 1 : synthèse du poly-α-(hydroxyvinylphosphonate)

1e étape : préparation du diéthyl-1-acétoxyvinylphosphonate

Dans un ballon en verre de 250 ml on a introduit 110 ml de toluène sec dans lequel on a dissous 110,4 g (0,8 mole) de diéthylphosphite et 0,8 ml d'étherate de trifluorure de bore. On a ensuite fait barboter dans la solution à travers un orifice en verre fritté du cétène gazeux préparé à partir d'acétone. On a laissé la température de la solution augmenter jusqu'à 55 °C puis on a maintenu cette température à environ 50 °C au moyen d'un réfrigérant externe. Le cétène qui s'est échappé du ballon a été retourné dans le milieu réactionnel au moyen d'un dispositif à distiller fonctionnant avec de la glace sèche.

Après 2 heures de réaction, 76,7 g de cétène ont été condensés dans le milieu de réaction. On a ensuite ajouté 2 g de $Na_2CO_3$ anhydre à la solution que l'on a distillé sous vide à travers une colonne de Vigreux d'une longueur de 15 cm.

Une fraction préliminaire distillant dans la plage de température s'étendant de 50 °C jusqu'à 84 °C sous un vide de 0,8 mm Hg a été éliminée. Cette fraction (38,9 g) contenait du diéthylphosphite n'ayant pas réagi et un composé cyclique non désiré contenant du phosphore de formule :

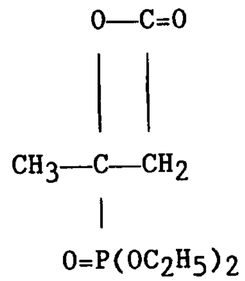

On a ensuite collecté deux fractions (total 72,4 g) de produit distillant à 100-106 °C sous 1,3 mm Hg d'indices de réfraction respectifs ($n_D^{20}$) de 1,4320 et 1,4356. Ces deux fractions ont été purifiées par double distillation d'abord avec une colonne de Widmer, ensuite avec une colonne de Fischer. On obtient ainsi du diéthyl-1-acétoxyvinylphosphonate pur de formule :

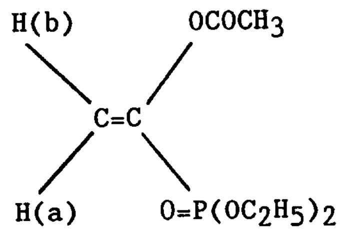

Les caractéristiques du produit obtenu ont été les suivantes : point d'ébullition de 85 °C sous 0,9 mm Hg ; $n_D^{20}$ = 1,4372 ; RMN-$^1$H ($CDCl_3$, TMS) δ 6,00 (dd, $H_a$, J (P,H) 10,8 Hz), 5,73 (dd, $H_b$, J (P,H) 34,9 Hz, J ($H_a$,$H_b$) 2,0 Hz), 4,12 ($OCH_2$, J 7,2 Hz), 2,20 (s, $C(O)CH_3$), 1,33 (t, $CH_3$) ppm. RMN-$^{31}$P ($CDCl_3$, $H_3PO_4$ 85 % externe) δ 8,21 ppm ; signal de la contamination (0,3 %) à δ 23,77 ppm.

<u>2e étape</u> : <u>polymérisation</u>

Dans une solution d'isobutanol, on a dissous 50 à 60 % en poids de diéthyl-1-acétoxyvinylphosphonate obtenu à la première étape et 0,6 à 0,7 % en poids de t-butyl-peroxy-2-éthylhexanoate La réaction a été maintenue sous atmosphère d'azote à 90 °C. Toutes les deux heures on a répété l'addition de la même quantité d'initiateur de façon à réaliser 5 additions successives d'initiateur.

Un examen par RMN-$^1$H a montré que la conversion du monomère a été quasi complète après une durée totale de réaction de 24 heures. La masse moléculaire du polymère obtenu a toutefois été assez faible étant donné l'augmentation peu importante de viscosité relative qui a résulté de la polymérisation. Les chaînes obtenues ont présenté une masse moléculaire inférieure à 2000 Da ainsi que l'a montré une dialyse du polymère hydrolysé au travers d'une membrane de coupure à 2000 Da.

<u>3e étape</u> : <u>hydrolyse du polymère</u>

Deux voies ont été poursuivies :

a) <u>hydrolyse acide</u> (produit (a))

On a traité 4,2 g de polymère avec 10 ml d'HCl concentré (12N) pendant 6 heures à 90 °C sous atmosphère d'azote. Le mélange a ensuite été neutralisé au moyen de NaOH 4 N jusqu'à ce que le pH soit remonté à 4,3 et a été dilué avec de l'eau distillée jusqu'à une teneur en polymère hydrolysé de 2,37 g/39 g de solution.

b) <u>hydrolyse alcaline</u> (produit (b))

On a également traité une solution de polymère 1,85 M provenant de la deuxième étape avec du NaOH 12 N pendant 6 heures à 90 °C sous atmosphère d'azote. Le mélange a ensuite été neutralisé au moyen d'HCl 4 N jusqu'à ce que le pH soit redescendu à 4,2 et dilué avec de l'eau distillée jusqu'à une teneur en

polymère hydrolysé de 2,28 g/21,5 g de solution.

Exemples 2R à 7

- Passivation de l'appareillage :

L'appareillage utilisé dans tous les exemples qui vont suivre a subi au préalable un traitement de passivation dans le but d'éliminer l'effet perturbateur des impuretés adsorbées sur la surface en contact avec les solutions de peroxyde d'hydrogène stabilisées mises en oeuvre.

Pour ce faire, on a immergé toute la verrerie susceptible d'être mise en contact avec l'$H_2O_2$ dans une solution aqueuse de $HNO_3$ à 65 % en poids et on a maintenu l'ensemble à 75 ° C pendant 24 heures.

- Tests de stabilité à long terme

Dans un erlenmeyer de 500 ml passivé comme décrit ci-dessus on a mélangé une solution aqueuse de peroxyde d'hydrogène à 85 % en poids de qualité ultrapure "électronique", de l'eau bidistillée, le stabilisant et une solution d'ions métalliques contenant du $FeCl_3$ et du $CuCl_2$ dans un rapport molaire Fe/Cu de 5/1. Les quantités des divers composants mis en oeuvre ont été calculées pour constituer 2 types de mélange final contenant respectivement 35 g $H_2O_2$/100 g de solution et 70 g $H_2O_2$/100 g de solution ainsi que 5 mg de métaux (exprimés en Fe + Cu) par kg de solution et 250 mg de stabilisant (à 100% de matière active) par kg de solution.

Le pH de chaque solution a été ajusté au moyen de $HNO_3$ ou de NaOH à une valeur de 3,0 pour la solution à 35 % $H_2O_2$ et à 1,3 pour la solution à 70 %.

Les solutions ont été stockées à température ambiante et leur titre en $H_2O_2$ a été déterminé périodiquement au cours du temps par une analyse iodométrique classique.

Les résultats obtenus sont donnés aux tableaux I ($H_2O_2$ à35 % en poids) et II ($H_2O_2$ à 70% en poids) qui suivent.

A titre de stabilisants, on a mis en oeuvre, d'une part, un polymère organique hydroxylé connu, à savoir le poly-α-(hydroxyacrylate) de Na et deux qualités de poly-α-(hydroxyvinylphosphonate) de Na selon l'invention, l'une étant obtenue au moyen d'une hydrolyse acide à la troisième étape de fabrication (produit PHVP (a) de l'exemple 1) et l'autre au moyen d'une hydrolyse alcaline (produit PHVP(b)).

Tableau I

| N° de l'essai | Nature du stabilisant | Analyse de la solution après, mois | | | | | | | | | |
|---|---|---|---|---|---|---|---|---|---|---|---|
| | | 0 | | 0,5 | | 1 | | 2 | | 3 | |
| | | H2O2 % | Pertes % | H2O2 % | Pertes % | H2O2 % | Pertes % | H2O2 % | Pertes % | H2O2 % | Pertes % |
| 2R | PHAS | 34,8 | 0 | - | - | 0,4 | 98,9 | - | - | - | - |
| 3 | PHVP (a) | 34,8 | 0 | 29,6 | 14,9 | 26,7 | 23,3 | 20,4 | 41,4 | 13,5 | 61,2 |
| 4 | PHVP (b) | 35,3 | 0 | 28,1 | 20,4 | 23,3 | 34,0 | 15,0 | 57,5 | 8,7 | 75,4 |

Tableau II

| N° de l'essai | Nature du stabilisant | Analyse de la solution après, mois | | | | | | | | | | | |
|---|---|---|---|---|---|---|---|---|---|---|---|---|---|
| | | 0 | | 0,5 | | 1 | | 2 | | 3 | | 4,5 | |
| | | $H_2O_2$ % | Pertes % | $H_2O_2$ % | Pertes % | $H_2O_2$ % | Pertes % | $H_2O_2$ % | Pertes % | $H_2O_2$ % | Pertes % | $H_2O_2$ % | Pertes % |
| 5R | PHAS | 69,7 | 0 | - | - | 7,2 | 94,3 | - | - | - | - | - | - |
| 6 | PHVP (a) | 69,8 | 0 | 62,1 | 11,0 | 60,1 | 13,9 | 53,2 | 23,8 | - | - | - | - |
| 7 | PHVP (b) | 70,3 | 0 | 69,4 | 1,3 | 69,2 | 1,6 | 69,0 | 1,9 | 69,0 | 1,9 | 69,3 | 1,4 |

Les résultats montrent clairement l'avantage des polymères organophosphoniques selon l'invention par rapport au stabilisant polymérique hydroxylé connu.

Exemples 8R à 10

En vue d'apprécier l'aptitude à la biodégradation du produit selon l'invention, on a procédé à des mesures de demande chimique en oxygène (DCO, selon la norme ISO 6060) et de demande biologique en oxygène ($DBO_5$, selon la norme ISO 5815). Les résultats ont été portés au tableau III qui suit où l'on a également calculé le rapport $DBO_5$/DCO, que l'on s'accorde généralement à reconnaître représenter la biodégradabilité d'un produit.

Tableau III

| No de l'exemple | Echantillon | DCO $mgO_2$/l | $DBO_5$ $mgO_2$/l | $DBO_5$/DCO |
|---|---|---|---|---|
| 8R | PHAS | 662 | 0 | 0 |
| 9 | PHVP (a) | 1880 | 751 | 0,40 |
| 10 | PHVP (b) | 2468 | 1200 | 0,49 |

L'exemple 8R a été réalisé, à titre de comparaison, avec le polymère organique hydroxylé connu, à savoir le poly-α(hydroxyacrylate) de Na (PHAS) et deux qualités de poly-α(hydroxyvinylphosphonate) de Na selon l'invention, l'une étant obtenue au moyen d'une hydrolyse acide à la troisième étape de fabrication (Echantillon PHVP (a) de l'exemple 1) et l'autre au moyen d'une hydrolyse alcaline (Echantillon PHVP (b)).

Les résultats montrent que la biodégradabilité mesurée par le rapport $DBO_5$/DCO est meilleure pour le PHVP que pour le polymère organique hydroxylé connu.

**Revendications**

**1.** Polymères organophosphoniques caractérisés en ce qu'ils répondent à la formule générale suivante :

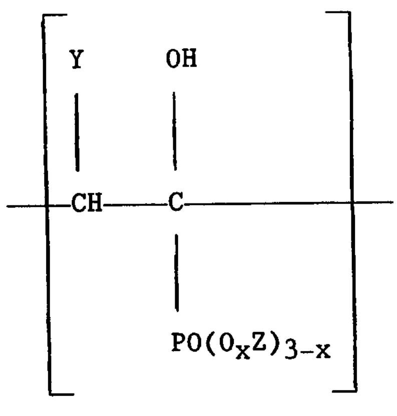

dans laquelle Y est un groupe méthyle, éthyle ou un atome d'hydrogène, Z représente un atome d'hydrogène, le groupe ammonium, un atome de métal alcalin ou de métal alcalino-terreux et x est un nombre entier égal à 1 lorsque Z représente un atome d'hydrogène, le groupe ammonium ou un atome de métal alcalin, ou à 2 lorsque Z représente un atome de métal alcalino-terreux.

**2.** Polymères organophosphoniques selon la revendication 1, caractérisés en ce que x est égal à 1 et Z est un atome de métal alcalin ou le groupe ammonium.

**3.** Polymères organophosphoniques selon la revendication 1 ou 2, caractérisés en ce qu'ils sont choisis parmi l'acide poly-α-(hydroxyvinylphosphonique) et ses sels de métal alcalin ou d'ammonium.

**4.** Procédé de fabrication de polymères organophosphoniques en trois étapes caractérisé en ce que, dans une première étape, on prépare un monomère par réaction d'un cétène avec du diéthylphosphite en présence d'un catalyseur acide; dans une deuxième étape, on polymérise le monomère en solution dans un solvant à l'aide d'un initiateur de radicaux libres et, dans une troisième étape, on hydrolyse le polymère au moyen d'une solution concentrée d'acide inorganique ou de base inorganique.

**5.** Procédé selon la revendication 4, caractérisé en ce que, dans la première étape, on fait réagir du cétène avec du diéthylphosphite en présence d'étherate de trifluorure de bore comme catalyseur.

**6.** Procédé selon la revendication 4 ou 5, caractérisé en ce que, dans la deuxième étape, l'initiateur de polymérisation est du t-butyl-peroxy-2-éthylhexanoate.

**7.** Solution aqueuse de peroxyde d'hydrogène stabilisée au moyen d'un polymère organophosphonique selon l'une des revendications 1 à 3.

**8.** Solution selon la revendication 7, caractérisée en ce que le polymère organophosphonique est sélectionné parmi l'acide poly-α-(hydroxyvinylphosphonique) et ses sels de métal alcalin ou d'ammonium.

**9.** Utilisation d'un polymère organophosphonique selon l'une des revendications 1 à 3 pour stabiliser une solution aqueuse de peroxyde d'hydrogène.

**10.** Utilisation d'un polymère organophosphonique selon la revendication 9, caractérisée en ce que le polymère est sélectionné parmi l'acide poly-α-(hydroxyvinylphosphonique) et ses sels de métal alcalin ou d'ammonium.

## Claims

**1.** Organophosphonic polymers characterised in that they correspond to the following general formula :

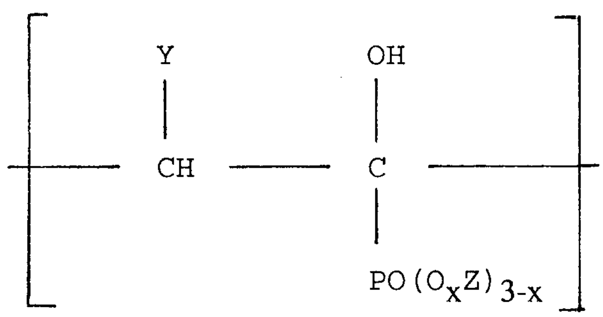

in which Y is a methyl or ethyl group or a hydrogen atom and Z denotes a hydrogen atom, the ammonium group or an alkali metal or alkaline-earth metal atom and in which x is an integer equal to 1 when Z denotes a hydrogen atom, the ammonium group or an alkali metal atom, or equal to 2 when Z denotes an alkaline-earth metal atom.

**2.** Organophosphonic polymers according to Claim 1, characterised in that x is equal to 1 and Z is an alkali metal atom or the ammonium group.

**3.** Organophosphonic polymers according to Claim 1 or 2, characterized in that they are chosen from poly-α-(hydroxyvinylphosphonic) acid and its alkali metal or ammonium salts.

**4.** Process for the manufacture of organophosphonic polymers in three stages, characterised in that, in a first stage, a monomer is prepared by reaction of a ketene with diethyl phosphite in the presence of an acidic catalyst; in a second stage the monomer is polymerised in solution in a solvent with the aid of a free-radical initiator and, in a third stage, the polymer is hydrolysed by means of a concentrated solution of inorganic acid or of inorganic base.

**5.** Process according to Claim 4, characterised in that, in the first stage, the ketene is reacted with diethyl phosphite in the presence of boron trifluoride etherate as catalyst.

**6.** Process according to Claim 4 or 5, characterised in that, in the second stage, the polymerisation initiator is t-butylperoxy 2-ethylhexanoate.

7. Aqueous hydrogen peroxide solution stabilised by means of an organophosphonic polymer according to one of Claims 1 to 3.

8. Solution according to Claim 7, characterised in that the organophosphonic polymer is chosen from poly-α-(hydroxyvinylphosphonic) acid and its alkali metal or ammonium salts.

9. Use of an organophosphonic polymer according to one of Claims 1 to 3 for stabilising an aqueous hydrogen peroxide solution.

10. Use of an organophosphonic polymer, according to Claim 9, characterised in that the polymer is chosen from poly-α-(hydroxyvinylphosphonic) acid and its alkali metal or ammonium salts.

**Patentansprüche**

1. Organophosphonpolymere gekennzeichnet dadurch, daß sie der folgenden allgemeinen Formel:

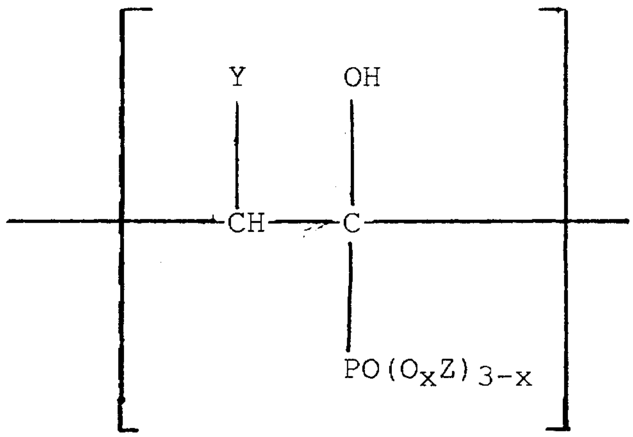

entsprechen, in der Y eine Methyl-, Ethylgruppe oder ein Wasserstoffatom ist, Z ein Wasserstoffatom, die Ammoniumgruppe, ein Alkalimetall- oder Erdalkalimetallatom darstellt und x eine ganze Zahl gleich 1, wenn Z ein Wasserstoffatom, die Ammoniumgruppe oder ein Alkalimetallatom darstellt, oder gleich 2 ist, wenn Z ein Erdalkalimetallatom darstellt.

2. Organophosphonpolymere nach Anspruch 1, dadurch gekennzeichnet daß x gleich 1 ist und Z ein Alkalimetallatom oder die Ammoniumgruppe ist.

3. Organophosphonpolymere nach Anspruch 1 oder 2, dadurch gekennzeichnet daß sie ausgewählt sind unter Poly-α-(hydroxyvinylphosphon)säure und ihren Alkalimetall- oder Ammoniumsalzen.

4. Verfahren zur Herstellung von Organophosphonpolymeren in drei Stufen, dadurch gekennzeichnet, daß man in einer ersten Stufe ein Monomer herstellt durch Reaktion eines Ketens mit Diethylphosphit in Anwesenheit eines sauren Katalysators; in einer zweiten Stufe das Monomer in Lösung in einem Lösungsmittel mit Hilfe eines Initiators von freien Radikalen polymerisiert; und in einer dritten Stufe das Polymer mittels einer konzentrierten Lösung von anorganischer Säure oder anorganischer Base hydrolysiert.

5. Verfahren nach Anspruch 4, dadurch gekennzeichnet, daß man in der ersten Stufe Keten mit Diethylphosphit in Anwesenheit von Bortrifluoridetherat als Katalysator reagieren läßt.

6. Verfahren nach Anspruch 4 oder 5, dadurch gekennzeichnet, daß in der zweiten Stufe der Polymerisationsinitiator t-Butyl-peroxy-2-ethylhexanoat ist.

7. Mittels eines Organophosphonpolymers nach einem der Ansprüche 1 bis 3 stabilisierte wässrige Wasserstoffperoxydlösung.

8. Lösung nach Anspruch 7, dadurch gekennzeichnet, daß das Organophosphonpolymer ausgewählt ist unter Poly-α-(hydroxyvinylphosphon)säure und ihren Alkalimetall- oder Ammoniumsalzen.

9. Verwendung eines Organophosphonpolymers nach einem der Ansprüche 1 bis 3 zum Stabilisieren einer wässrigen Wasserstoffperoxydlösung.

10. Verwendung eines Organophosphonpolymers nach Anspruch 9, dadurch gekennzeichnet, daß das Polymer ausgewählt ist unter Poly-α-(hydroxyvinylphosphon)säure und ihren Alkalimetall- oder Ammoniumsalzen.